(19) Europäisches Patentamt
European Patent Office
Office européen des brevets

(11) **EP 2 357 869 B1**

(12) **EUROPEAN PATENT SPECIFICATION**

(45) Date of publication and mention
of the grant of the patent:
**27.05.2020 Bulletin 2020/22**

(51) Int Cl.:
*H04J 1/00* *(2006.01)* *H04J 11/00* *(2006.01)*
*H04W 28/26* *(2009.01)* *H04W 72/12* *(2009.01)*

(21) Application number: **09829015.8**

(22) Date of filing: **12.11.2009**

(86) International application number:
**PCT/JP2009/069593**

(87) International publication number:
**WO 2010/061767 (03.06.2010 Gazette 2010/22)**

(54) **METHOD OF ALLOCATION OF RESOURCE, COMMUNICATIONS SYSTEM, BASE STATION, AND PROGRAM**

RESSOURCENZUWEISUNGSVERFAHREN, KOMMUNIKATIONSSYSTEM, BASISSTATION UND PROGRAMM

PROCÉDÉ D'ALLOCATION DE RESSOURCES, SYSTÈME DE COMMUNICATION, STATION DE BASE ET PROGRAMME

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.11.2008 JP 2008301124**

(43) Date of publication of application:
**17.08.2011 Bulletin 2011/33**

(73) Proprietor: **NEC Corporation**
**Minato-ku**
**Tokyo 108-8001 (JP)**

(72) Inventors:
• **NOBUKIYO, Takahiro**
**Tokyo 108-8001 (JP)**
• **MOCHIZUKI, Takashi**
**Tokyo 108-8001 (JP)**
• **ISHII, Naoto**
**Tokyo 108-8001 (JP)**

(74) Representative: **Vossius & Partner**
**Patentanwälte Rechtsanwälte mbB**
**Siebertstrasse 3**
**81675 München (DE)**

(56) References cited:
EP-A2- 1 291 771       WO-A2-03/042856
WO-A2-2007/054874    JP-A- 2000 236 339
US-A1- 2002 194 351   US-A1- 2008 140 842
US-A1- 2008 175 199

• **3GPP TS 36.300 V8.6.0** September 2008, pages 63 - 64, XP008146886

**Description**

Technical Field

This invention relates to a method of allocating resources, in particular, a method of allocating resources which is performed by reservation-type scheduling.

Background Art

The Long Term Evolution (LTE) standardized in the 3rd Generation Partnership Project (3GPP) employs dynamic scheduling and persistent scheduling as scheduling schemes (see, for example, 3GPP TS 36.300 V8.4.0 (2008-03), 3GPP E-UTRA and E-UTRAN Overall description, p. 61).

The dynamic scheduling is a scheduling scheme in which a resource is allocated according to channel quality of a user. The resource represents a physical resource block (PRB), which is a unit of allocation of a radio band, and modulation and coding schemes (MCS). The dynamic scheduling is subject to a limitation of a capacity of a control channel because signaling information needs to be transmitted each time the resource is allocated. As a result, there is a limitation on the number of users that can simultaneously have access. For the traffic having an irregular generation cycle, a resource is allocated by the dynamic scheduling.

Meanwhile, a reservation-type scheduling scheme called the persistent scheduling is a scheduling scheme in which regularity of the generation cycle of the traffic exhibited by the voice over internet protocol (VoIP) or the like is used to reserve a resource for transmitting a packet. The reservation can omit the transmission of the signaling information, which can greatly increase the number of users that can simultaneously have access.

In the persistent scheduling, the resource to be reserved is not only the resource by which a packet is initially transmitted but may also be the resource for retransmission performed when the transmitted packet cannot be received correctly. However, if the possibility of the retransmission is low, it is more efficient to reserve the resource only for the initial transmission. This is because reserving the resource for the retransmission as well means uselessly reserving the resource to be rarely used and thus decreases the number of users that can be reserved. If the resource is not reserved for the retransmission, the resource is allocated for the retransmission by the dynamic scheduling. Even if the resource is reserved for the retransmission, when further retransmission becomes necessary because of erroneous reception of the retransmission packet, the resource is allocated for the further retransmission by the dynamic scheduling.

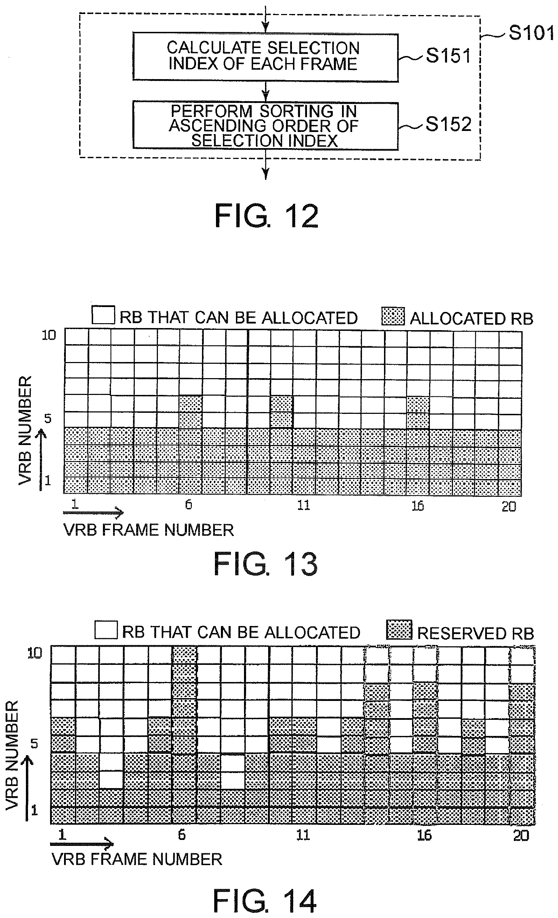

In the persistent scheduling, a reservation state of a resource block (RB) is managed by a matrix of a time axis (horizontal axis) and a frequency axis (vertical axis) (hereinafter, referred to as "reservation map"). Fig. 13 illustrates an example of the reservation map. Note that a similar map is used for the dynamic scheduling as well (see, for example, PCT Japanese Patent Translation Publication No. 2008-515244).

In the reservation map, the horizontal axis indicates a frame number, and the vertical axis indicates a resource number. The frame number indicates a relative time because the resource is allocated in predetermined cycles. The RB to be allocated is called a virtual RB (VRB), and is mapped to a PRB in the actual time. In Fig. 13, ten VRBs per frame are managed in a time cycle of twenty frames. Normally, the time cycle is set based on a traffic generation cycle of the VoIP. The RB to be allocated newly by the persistent scheduling and the RB to be allocated by dynamic scheduling are allocated from among unallocated RBs.

VoIP traffic, which is generated periodically, needs to have a transmission delay thereof suppressed to a predetermined range. Accordingly, a general option for minimizing the transmission delay when the persistent scheduling is applied to the VoIP traffic may be a scheduling scheme in which a VRB is reserved so as to minimize the transmission delay in terms of the generation time of a transmission packet.

If the resource cannot be secured by the persistent scheduling, the resource is allocated by the dynamic scheduling.

The present invention is defined by the claims. Dependent claims refer to preferred embodiments.

WO 2007/054874 A2 relates to a protocol for coordinating the allocation of time slots in a network that comprises sub networks that operate on a plurality of channels. US 2008/175199 A1 relates to a method and a corresponding system for wireless communication involving communicating via a control channel.

US 2008/140842 A1 relates to a universal plug and play quality of service network system and a corresponding method of reserving a path and resource thereof.

Disclosure of the Invention

The related persistent scheduling scheme has a problem of an increase in transmission delay. Fig. 14 is referenced to describe this problem. It is assumed that a resource is allocated for the retransmission by dynamic scheduling instead of persistent scheduling.

In the related scheduling scheme, a VRB is reserved so as to minimize the transmission delay in terms of the generation time of a transmission packet. For this reason, the number of reserved RBs per frame varies, which may generate a frame (for example, a frame number 6 of Fig. 14) having all the VRBs allocated only by reservation. With such a frame, it is not possible to secure a RB for a retransmission packet. Further, with a frame (for example, frame numbers 14, 16, and 20 of Fig. 14) in which a large number of VRBs have already been reserved, it is difficult to secure the RB for the retransmission packet. Therefore, it is necessary to wait for the retransmission until the RB for the retransmission packet is secured, which leads to a problem of an increase in transmission delay. If the retransmission is performed by a synchronization system such as an LTE uplink, the retransmission needs to be performed at a predetermined timing, thereby raising a problem of, in particular, an increase in transmission delay.

An object of this invention is to provide a method of allocating resources which is capable of suppressing a transmission delay and suitable for reservation-type scheduling.

According to one aspect of this invention, a method of allocating resources in a communications system includes the steps of: obtaining a relational value related to a number of reserved resources on a time frame basis; and reserving a resource of a time frame with the relational value being small as a resource that can be used periodically.

According to another aspect of this invention, in a communications system including a base station, the base station includes: means for obtaining a relational value related to a number of reserved resources on a time frame basis; and means for reserving a resource of a time frame with the relational value being small as a resource that can be used periodically.

According to a further aspect of this invention, a base station includes: means for obtaining a relational value related to a number of reserved resources on a time frame basis; and means for reserving a resource of a time frame with the relational value being small as a resource that can be used periodically.

According to a still further aspect of this invention, a program causes a computer to function as: means for obtaining a relational value related to a number of reserved resources on a time frame basis; and means for reserving a resource of a time frame with the relational value being small as a resource that can be used periodically.

This invention produces an effect that the reservation-type scheduling with a transmission delay thereof being suppressed can be realized. This is because the relational value related to the number of reserved RBs on a frame basis is obtained and an RB of a frame having a small relational value is allocated.

Brief Description of the Drawing

Fig. 1 is a block diagram illustrating a basic configuration of a radio communications system according to a first embodiment of this invention.

Fig. 2 is a flowchart illustrating a resource allocation operation procedure of a reservation-type scheduling section in the radio communications system of Fig. 1.

Fig. 3 is a flowchart illustrating a detailed operation procedure of Step S101 of Fig. 2.

Fig. 4 is a diagram illustrating an example of a list created according to a list creation procedure of Fig. 3.

Fig. 5 is a time-line conceptual diagram illustrating an operation of the radio communications system of Fig. 1.

Fig. 6 is a flowchart illustrating an operation procedure for list creation performed by a reservation-type scheduling section of a radio communications system according to a second embodiment of this invention.

Fig. 7 is a time-line conceptual diagram of the number of allocated RBs for describing a shortage of RBs that can be caused in the radio communications system according to the first embodiment of this invention.

Fig. 8 is a flowchart illustrating an operation procedure for list creation performed by a reservation-type scheduling section of a radio communications system according to a third embodiment of this invention.

Fig. 9 is a diagram illustrating an example of a list created according to a list creation procedure of Fig. 8.

Fig. 10 is a flowchart illustrating an operation procedure for list creation performed by a reservation-type scheduling section of a radio communications system according to a fourth embodiment of this invention.

Fig. 11 is a block diagram illustrating a configuration of a radio communications system according to a fifth embodiment of this invention.

Fig. 12 is a flowchart illustrating an operation procedure for list creation performed by a reservation-type scheduling section of the radio communications system of Fig. 11.

Fig. 13 is a conceptual diagram of a reservation map of RBs used in reservation-type scheduling.

Fig. 14 is a conceptual diagram of the reservation map for describing a problem posed by a conventional persistent scheduling method.

Best Modes for Embodying the Invention

The invention made is disclosed in the attached set of independent claims. Hereinafter, embodiments of this invention are described in detail with reference to the drawings.

<First embodiment> (Equalization of the numbers of reserved RBs)

(Description of configuration)

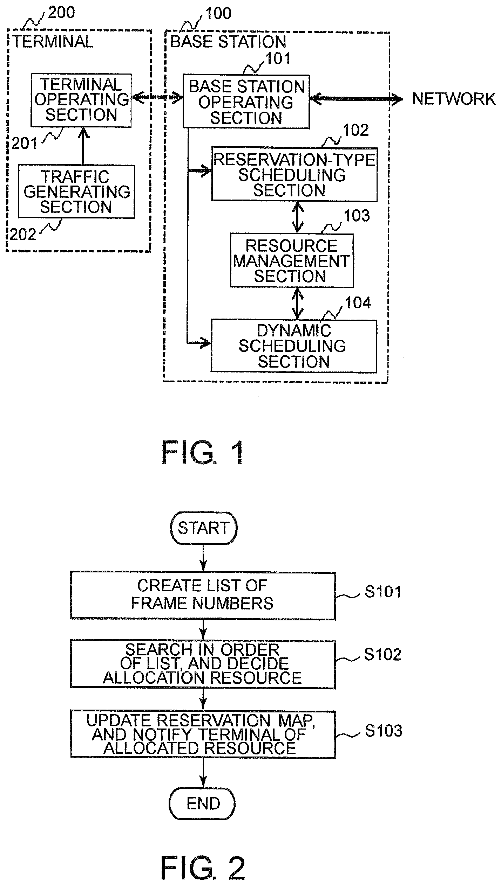

Fig. 1 is a block diagram illustrating an example of a basic configuration of a radio communications system according to a first embodiment of this invention.

With reference to Fig. 1, this communications system includes a base station 100 and a terminal 200. The base station 100 and the terminal 200 are connected to each other through a radio channel, and the base station 100 is connected to a network (not shown). Further, although not shown, the base station 100 can be connected by radio to a plurality of terminals. Further, a plurality of base stations can exist. A radio band is divided into RBs that are units for allocation.

The base station 100 includes a base station operating section 101, a reservation-type scheduling section 102, a resource management section 103, and a dynamic scheduling section 104.

The base station operating section 101 has a function equivalent to a function provided to a base station generally used in the radio communications system, such as LTE. A configuration and an operation thereof are known, and hence description thereof is omitted.

The reservation-type scheduling section 102 has a function of deciding a resource to be reserved by persistent scheduling. The reservation-type scheduling section 102 allocates the resource for initial transmission of a VoIP packet.

The resource management section 103 has a function of managing allocation information obtained by the reservation-type scheduling section 102 and the dynamic scheduling section 104. In this embodiment, as the function of managing the allocation information, the resource management section 103 has a function of measuring or calculating the number of RBs allocated by the persistent scheduling.

The dynamic scheduling section 104 has a function of deciding a resource to be reserved by dynamic scheduling. The dynamic scheduling section 104 allocates the resource for initial transmission of traffic other than a VoIP packet and the resource for a retransmission packet.

Further, the terminal 200 includes a terminal operating section 201 and a traffic generating section 202.

The terminal operating section 201 has a function equivalent to a function provided to a terminal generally used in an LTE system. A configuration and an operation thereof are known, and hence description thereof is omitted.

The traffic generating section 202 has a function of generating traffic and a function of notifying the base station of a buffer size at a predetermined timing if the traffic is generated. The buffer size represents the size of data residing on the terminal 200. Further, between the base station 100 and the terminal 200, a logical radio channel is established on a traffic type basis, and the buffer size is notified on an established traffic type basis.

(Description of operation)

Next, an operation of the radio communications system according to this embodiment is described with reference to the drawings. Here, the description is made by taking an uplink as an example. Further, it is assumed that resource blocks (RBs) are managed in units of predetermined cycles (here, twenty frames) by using a time frame given a frame number.

Fig. 2 illustrates an operation procedure in which the reservation-type scheduling section 102 performs resource allocation by the persistent scheduling if the base station 100 is notified by the terminal 200 of the buffer size of VoIP traffic.

The reservation-type scheduling section 102 creates a list of frame numbers for determining a selection rank of a frame number to be allocated (S101). Subsequently, in order of the created list, the reservation-type scheduling section 102 searches for the frame number that can be allocated, and decides an allocation resource to be reserved (S102). Note that the resource represents the frame number, a VRB number, and MCS. Further, the RB of the frame ranked highest in the list is normally allocated, but in the case of LTE, which involves single carrier transmission, the frame ranked highest in the list may not be allocated in a case where the necessary number of RBs cannot be secured successively or other such cases. Subsequently, the reservation-type scheduling section 102 updates a reservation map based on the allocation, and notifies the terminal 200 of information on the resource to be allocated (S103).

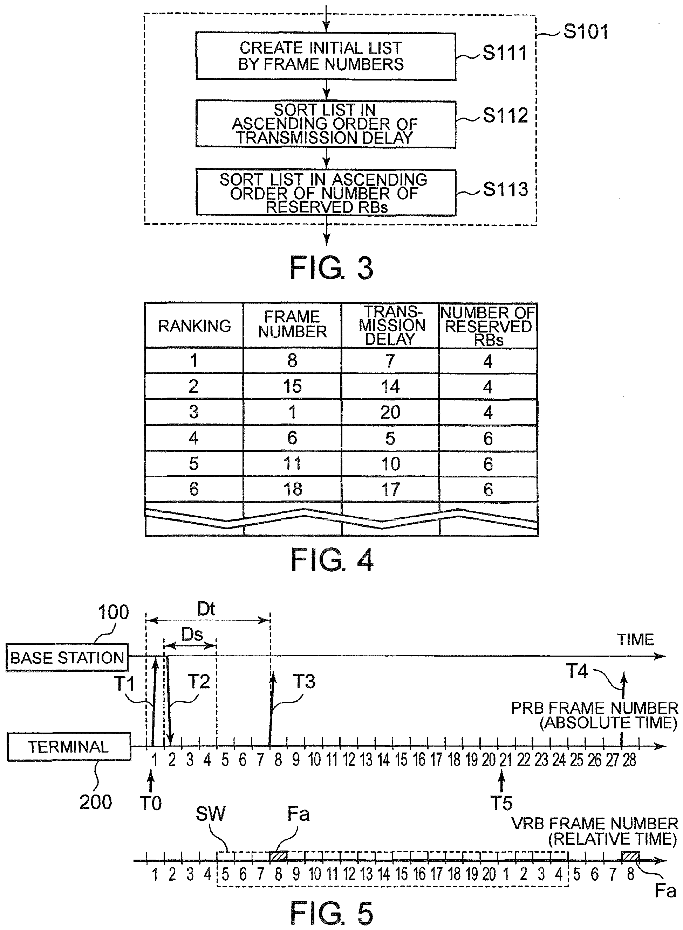

Fig. 3 is a flowchart illustrating a detailed operation procedure of Step S101 of Fig. 2.

As illustrated in Fig. 3, the reservation-type scheduling section 102 first sorts the frame numbers in ascending order to create an initial list (S111). Subsequently, the reservation-type scheduling section 102 calculates a transmission delay to be caused when transmission is performed by each frame, and sorts the list in ascending order of the transmission delay (S112). Subsequently, the reservation-type scheduling section 102 reads the number of reserved RBs (number of reserved resources) for each frame from the resource management section 103, and sorts the list in ascending order of the number of reserved RBs (S113). At this time, the resource management section 103 functions as means for obtaining the number of reserved resources as a relational value, and the reservation-type scheduling section 102 functions as means for reserving the resource of a time frame having a small relational value as the resource that can be used periodically.

Fig. 4 illustrates an example of the list created by the above-mentioned process. As illustrated in Fig. 4, the frame number having a smaller number of reserved RBs is ranked higher by the sorting. Further, under the same number of reserved RBs, the frame number having a shorter transmission delay is ranked higher. Note that the transmission delay is assumed to be a time difference between a frame at which the base station 100 receives a notification of the buffer size and a frame at which the terminal 200 starts transmitting a packet.

According to this embodiment, the numbers of reserved RBs of the respective frames can be equalized to reduce the frames that use up the VRBs, and hence it is possible to average the transmission delay at a low level.

Fig. 5 is referenced to describe the operation of the communications system according to this embodiment in further detail. Fig. 5 is a conceptual diagram of a time line from the traffic generation on the terminal through an LTE uplink to the resource allocation performed by the persistent scheduling and the VoIP packet transmission by the reserved resource.

When the VoIP traffic is generated (T0), the terminal 200 informs (notifies) the base station 100 of the buffer size (T1). The VoIP packet generated in the traffic generating section 202 periodically arrives at the terminal operating section 201 (T5). On the informed base station 100, the reservation-type scheduling section 102 decides the reserved resource by the flowcharts of Fig. 2 and Fig. 3, and notifies the terminal 200 thereof (allocates the resource) (T2).

In the case of the resource allocation, the reservation-type scheduling section 102 takes a scheduling delay Ds into consideration. The scheduling delay Ds represents the shortest time that is required by the terminal 200 to be ready to perform transmission after the base station 100 transmits the information on the resource allocation to the terminal 200. Fig. 5 indicates that the resource of a frame number 5 and the subsequent numbers can be reserved in a case where the resource allocation information is transmitted at a frame number 2 of a PRB (sliding window SW of the reservation map). Further, Fig. 5 illustrates an example of the allocation based on the list of Fig. 4, and the RB of a frame number 8 is allocated to the terminal 200. The transmission delay in this case corresponds to Dt. In addition, in Fig. 5, the reservation map is managed by the repetition per twenty frames (relative time), and thus the terminal 200 transmits the VoIP packet periodically at the frame number 8 (Fa) of the reserved VRB (T3, T4).

As described above, in the radio communications system according to this embodiment, a frame having a small number of reserved PBs is newly allocated. With this configuration, it is possible to equalize the numbers of reserved RBs of the respective frames and reduce the frames that use up the VRBs. As a result, it is easy to secure the retransmission packet while suppressing the transmission delay.

<Second embodiment> (Equalization of the numbers of used RBs)

(Description of configuration)

Next described is a radio communications system according to a second embodiment of this invention. The configuration of the radio communications system according to this embodiment is assumed to be the same as that of the radio communications system illustrated in Fig. 1. However, for the management of the allocation information, the resource management section 103 has a function of calculating an average value of the numbers of used RBs (number of used resources or relational value) calculated from the number of RBs (number of reserved resources) allocated by the persistent scheduling and the number of RBs (number of resources allocated as the resources that can be temporarily used) allocated by the dynamic scheduling.

(Description of operation)

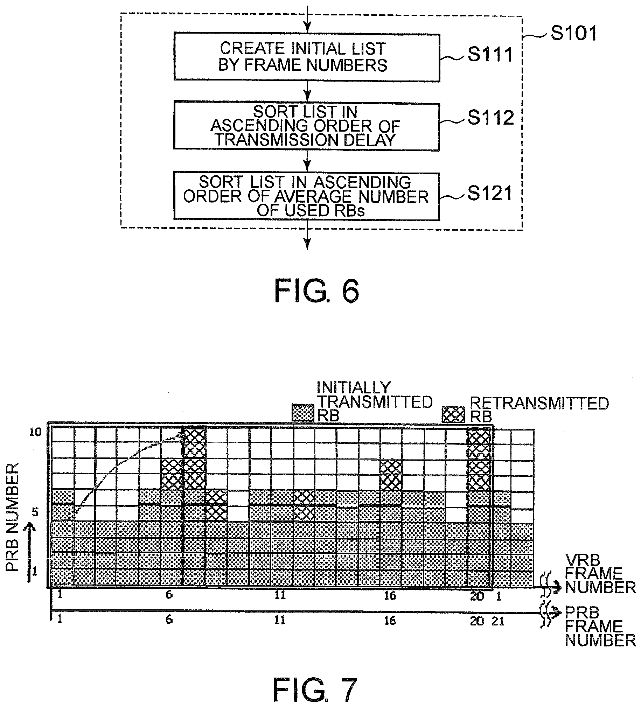

Next, the operation of this embodiment is described with reference to the drawings. The second embodiment is different from the first embodiment in that an operation illustrated in Fig. 6 is carried out instead of that of Fig. 3.

With reference to Fig. 6, the processing of Step S113 of Fig. 3 is replaced by Step S121. Specifically, after sorting the list in ascending order of the transmission delay (S112), the reservation-type scheduling section 102 reads an average number of used RBs Nrb_ave(i) from the resource management section 103, and sorts the list in ascending order thereof (S121). Note that the average number of used RBs Nrb_ave(i) is found by being calculated on a frame basis by the resource management section 103 by use of Expression 1.

$$Nrb\_ave(i)=Nrb\_p(i)+Nrb\_d\_ave(i) \qquad \text{(Expression 1)}$$

Here, "i" represents the frame number (relative time) of a VRB. $Nrb\_p(i)$ represents the number of RBs reserved by the persistent scheduling, and $Nrb\_d\_ave(i)$ represents the average number of RBs allocated by the dynamic scheduling. Further, $Nrb\_d\_ave(i)$ is calculated by use of Expression 2.

$$Nrb\_d\_ave(i)=CEIL(Wd\times Nrb\_d\_ave(i)+(1-Wd)\times Nrb\_d(i))$$

$$\text{(Expression 2)}$$

Here, "$Nrb\_d(i)$" represents the number of RBs (instantaneous value) allocated by the dynamic scheduling, and "Wd" represents a weighting factor for equalization. "CEIL(x)" is a function for returning a minimum integer that is not below an argument x.

According to the first embodiment, it is possible to equalize the numbers of reserved RBs of the respective frames. However, in the first embodiment, the RB allocated by the dynamic scheduling is not taken into consideration. In a case where the number of RBs allocated by the dynamic scheduling greatly differs among the respective frames, the RBs for the retransmission packet may not be secured. For example, if there is a large difference in channel quality of the terminals allocated in the respective frames, the retransmission packets are concentrated on a specific frame, and thus there is a possibility that the RBs for the retransmission packet cannot be secured. Fig. 7 illustrates an example thereof.

In Fig. 7, the number of RBs that are used greatly differs among the respective frames, and the number of used RBs reaches an upper limit in frame numbers 7 and 20. Therefore, there is a possibility that the necessary number of RBs for retransmission is not secured in those frames. For example, four RBs are allocated in the frame number 7 in order to retransmit a packet that has failed to be transmitted in a frame number 1. Here, if five or more RBs are necessary for the retransmission, there exists a terminal (retransmission user) to which an RB has not been allocated. According to the second embodiment, it is possible to avoid such a problem. In other words, according to this embodiment, the numbers of used RBs of the respective frames can be equalized to reduce the frames that cannot secure the RBs for the retransmission packet, and hence it is possible to average the transmission delay at a low level.

<Third embodiment> (Equalization of the numbers of used RBs + consideration of retransmission)

(Description of configuration)

Next described is a radio communications system according to a third embodiment of this invention. The configuration of the radio communications system according to this embodiment is assumed to be the same as in the second embodiment.

(Description of operation)

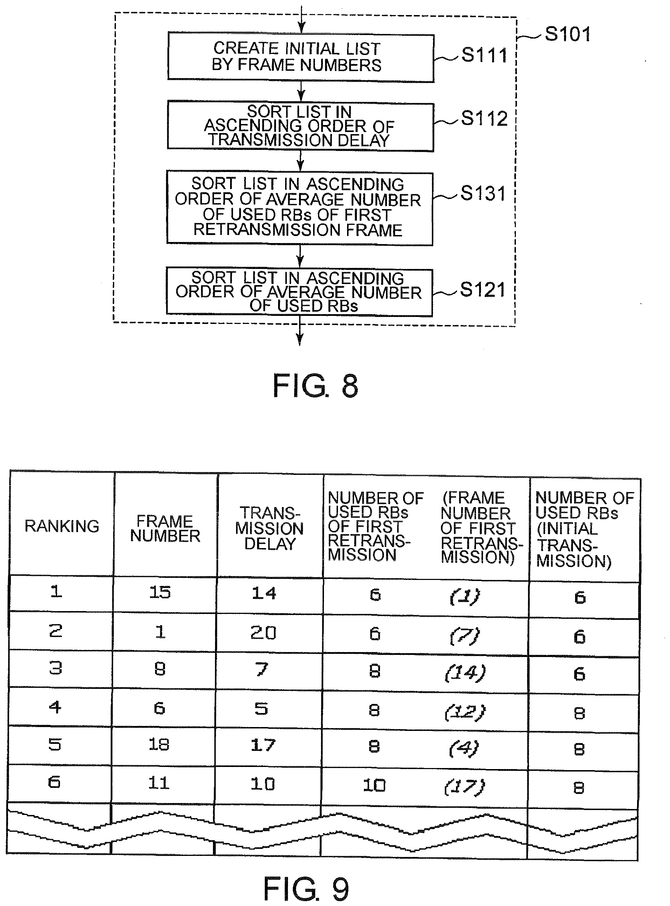

Next, the operation of this embodiment is described with reference to the drawings. In this embodiment, it is assumed that the retransmission is performed by the synchronization system. The third embodiment is different from the second embodiment in that an operation illustrated in Fig. 8 is carried out instead of that of Fig. 6.

With reference to Fig. 8, Step S131 is added between Step S112 and Step S121 of Fig. 6. Specifically, after sorting the list in ascending order of the transmission delay (S112), the reservation-type scheduling section 102 reads the average number of used RBs of the frame corresponding to the first retransmission for each frame from the resource management section 103, and sorts the list in ascending order thereof (S131). For example, if a retransmission cycle is assumed to be six frames, the first retransmission regarding the frame number 1 is performed at the frame number 7 (=1+6), and the average number of used RBs of the frame number 7 is read. After that, the reservation-type scheduling section 102 reads the average numbers of used RBs of the respective frame numbers from the resource management section 103, and sorts the list in ascending order thereof (S121).

Fig. 9 illustrates an example of the list obtained in such a manner as described above. The retransmission cycle is assumed to be six frames. As illustrated in Fig. 9, the frame number having a smaller average number of used RBs corresponding thereto is ranked higher. Under the same average number of used RBs, the frame number having a smaller number of used RBs for the first retransmission is ranked higher. Further, under the same number of used RBs for the first retransmission, the frame number having a shorter transmission delay is ranked higher.

According to this embodiment, in the case of the retransmission performed by the synchronization system, in addition to the effect of the second embodiment, it is further possible to avoid the allocation of the frame having RBs that are hardly secured at the time of the retransmission.

Note that in this embodiment, even if the average number of used RBs of the first retransmission frame is large, the RB of the frame can be allocated. However, the RB of such a frame can also be blocked so as not to be allocated. For example, the frame number 8 ranked in the third place in Fig. 9 has the number of used RBs for the first retransmission as many as eight. Therefore, the allocation in such the frame number 8 may be blocked.

<Fourth embodiment> (Equalization of the numbers of used RBs of traffic allocated by the persistent scheduling)

(Description of configuration)

Next described is a radio communications system according to a fourth embodiment of this invention. The configuration of this embodiment is assumed to be the same as that of the radio communications system according to the second embodiment. However, the resource management section 103 has a function of calculating the average number of RBs (number of used resources or relational value) allocated by the dynamic scheduling for the retransmission of the traffic initially transmitted by the persistent scheduling.

(Description of operation)

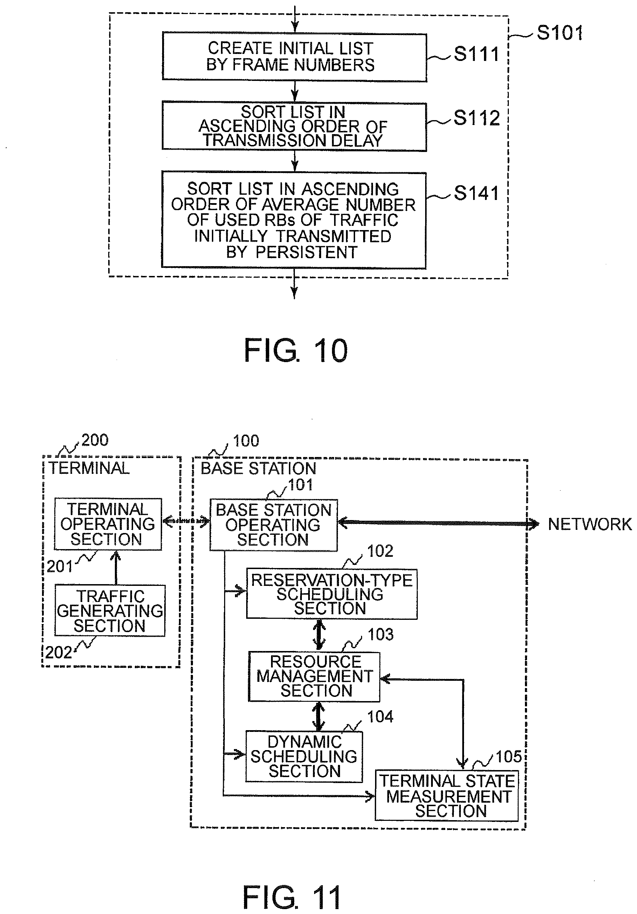

Next, the operation of this embodiment is described with reference to the drawings. The fourth embodiment is different from the second embodiment in that an operation illustrated in Fig. 10 is carried out instead of that of Fig. 6.

With reference to Fig. 10, the processing of Step S121 of Fig. 6 is replaced by Step S141. Specifically, after sorting the list in ascending order of the transmission delay (S112), the reservation-type scheduling section 102 reads an average number of used RBs of the traffic initially transmitted by the persistent scheduling Nrb_ptf_ave(i) from the resource management section 103, and sorts the list in ascending order thereof (S141). Note that the average number of used RBs of the traffic initially transmitted by the persistent scheduling Nrb_ptf_ave(i) is found by being calculated on a frame basis by the resource management section 103 by use of Expression 3.

$$Nrb\_ptf\_ave(i) = Nrb\_p(i) + Nrb\_d\_ptf\_ave(i)$$

$$(\text{Expression 3})$$

Here, "Nrb_d_ptf_ave(i)" represents the average number of RBs allocated by the dynamic scheduling for the retransmission of the traffic initially transmitted by the persistent scheduling. Nrb_d_ptf_ave(i) is calculated by use of Expression 4.

$$Nrb\_d\_ptf\_ave(i) = CEIL(Wd \times Nrb\_d\_ptf\_ave(i)$$
$$+ (1 - Wd) \times Nrb\_d\_ptf(i)) \quad (\text{Expression 4})$$

Here, "Nrb_d_ptf(i)" represents the number of RBs (instantaneous value) allocated by the dynamic scheduling for the retransmission of the traffic initially transmitted by the persistent scheduling. The description of the same parameters as those of the second embodiment is omitted.

According to this embodiment, the numbers of used RBs of the respective frames can be equalized for the traffic initially transmitted by the persistent scheduling, and hence, unlike the second embodiment, it is possible to eliminate an influence of irregularly-generated burst traffic for which the RBs are allocated by the dynamic scheduling from the initial transmission. In a case where all the allocation for the initial transmission is performed by the persistent scheduling, the same operation as in the second embodiment is performed in this embodiment.

<Fifth embodiment> (Equalization of the numbers of used RBs by dispersing low-quality users to respective frames)

(Description of configuration)

Next described is a fifth embodiment of this invention. Fig. 11 is a block diagram illustrating an example of a basic configuration of a radio communications system according to the fifth embodiment. The radio communications system of Fig. 11 is different from that of Fig. 1 in that the base station 100 further includes a terminal state measurement section 105.

Further, the terminal operating section 201 is different from that of the radio communications system of Fig. 1 in that the terminal operating section 201 further has a function of transmitting communications quality information to the base station 100 at a predetermined timing. Note that the communications quality information represents a path loss, a signal to interference and noise power ratio (SINR) of a pilot signal transmitted by the base station, power headroom (PHR) information indicating an allowance of transmission power of the terminal, and the like.

The terminal state measurement section 105 functions as means for obtaining information regarding communications quality. In this embodiment, the terminal state measurement section 105 has a function of distinguishing in response to the communications quality information from the terminal 200 by regarding the terminal 200 as a low-quality user if the communications quality of the terminal 200 is lower than a predetermined threshold value and otherwise as a non low-quality user. Further, for the management of the allocation information, the resource management section 103 has a function of measuring on a frame basis the number of low-quality users to which the RBs are allocated by the persistent scheduling. In other words, results of the distinguishing (information regarding communications quality) obtained by the terminal state measurement section 105 are managed by the resource management section 103.

(Description of operation)

Next, the operation of this embodiment is described with reference to the drawings. The fifth embodiment is different from the first embodiment in that an operation illustrated in Fig. 12 is carried out instead of that of Fig. 3.

With reference to Fig. 12, the reservation-type scheduling section 102 calculates a selection index M_alloc(i) of each frame for determining the selection rank of the frame to be allocated (S 151), and performs the sorting in ascending order of the selection index (S152). In order to calculate M_alloc(i), the reservation-type scheduling 102 reads the number of reserved low-quality users for each frame from the resource management section 103 as the information regarding communications quality.

M_alloc(i) is calculated by the following Expression 5.

$$M\_alloc(i) = CEIL(Nrb\_p(i) \times M\_lowue(i))$$

$$\text{(Expression 5)}$$

Here, "i" represents the frame number (relative time) of the VRB. "Nrb_p(i)" represents the number of RBs reserved by the persistent scheduling, and "M_lowue(i)" represents a metric indicating how many the low-quality users are reserved.

M_lowue(i) is calculated by, for example, the following Expression 6.

$$M\_lowue(i) = 10 \verb|^| (Nue\_low(i)/10) \qquad \text{(Expression 6)}$$

Here, "Nue_low(i)" represents the number of reserved low-quality users, and "x^y" represents the y-th power of x.

As is clear from Expression 6, M_alloc(i) becomes smaller as the number of RBs reserved by the persistent scheduling becomes smaller and the number of low-quality users becomes smaller. Accordingly, by allocating the RBs in ascending order of M_alloc(i) of the frame, it is possible to avoid the low-quality user from being concentrated on a specific frame and to equalize the numbers of reserved RBs of the respective frames.

Further, in this embodiment, the terminal 200 is caused to inform of the communications quality information, but the base station 100 may be caused to measure the communications quality. For example, in a case where the base station 100 knows the transmission power of the terminal 200, the path loss can be measured by measuring the reception power at the base station 100. Further, the terminals may be grouped by using a reception error rate as the communications quality information.

Further, in this embodiment, the number of RBs reserved by the persistent scheduling is used for the calculation of the selection index M_alloc(i), but this invention is not limited thereto, and the number of used RBs according to any one of the second to fourth embodiments may be used.

<Other embodiments>

Several embodiments of this invention have been described above, but this invention is not limited to the above-mentioned embodiments. For example, the above-mentioned embodiments have been described by taking the uplink as an example, but this invention is also applied to other communications systems using FDMA to which frequency-division multiplex is applied, regardless of an uplink or a downlink, as long as the other communications systems are the communications system in which traffic is regularly generated and the resource that can be used periodically is reserved for the transmission of the traffic. Further, it is apparent that the operations of the respective embodiments described by using the flowcharts and the calculation expressions can be configured so that the operation procedures thereof are previously stored as programs in a storage medium such as a ROM and a computer is caused to read and execute the programs.

This invention includes the following other embodiments.

A method of allocating resources in a communications system according to a first other embodiment of this invention includes the steps of: obtaining a relational value related to a number of reserved resources on a time frame basis; and reserving a resource of a time frame with the relational value being small as a resource that can be used periodically.

In a method of allocating resources according to a second other embodiment of this invention, the relational value includes the number of reserved resources.

In a method of allocating resources according to a third other embodiment of this invention, the relational value includes a number of used resources that is calculated from the number of reserved resources and a number of resources allocated as resources that can be temporarily used.

In a method of allocating resources according to a fourth other embodiment of this invention, in a case where a retransmission method for data is a synchronization system, a resource of a time frame with the number of used resources being small is allocated from among time frames which are to be used when the data is retransmitted.

In a method of allocating resources according to a fifth other embodiment of this invention, the relational value includes a number of used resources that is calculated from the number of reserved resources and a number of resources used for retransmission with regard to traffic transmitted by the reserved resources.

A method of allocating resources according to a sixth other embodiment of this invention further includes the steps of: obtaining information regarding communications quality; and amplifying the relational value based on the information regarding communications quality, in which the resource of the time frame with the amplified relational value being small is allocated.

A communications system according to a seventh other embodiment of this invention includes a base station, in which the base station includes: means for obtaining a relational value related to a number of reserved resources on a time frame basis; and means for reserving a resource of a time frame with the relational value being small as a resource that can be used periodically.

In a communications system according to an eighth other embodiment of this invention, the relational value includes the number of reserved resources.

In a communications system according to a ninth other embodiment of this invention, the relational value includes a number of used resources that is calculated from the number of reserved resources and a number of resources allocated as resources that can be temporarily used.

In a communications system according to a tenth other embodiment of this invention, in a case where a retransmission method for data is a synchronization system, a resource of a time frame with the number of used resources being small is allocated from among time frames which are to be used when the data is retransmitted.

In a communications system according to an eleventh other embodiment of this invention, the relational value includes a number of used resources that is calculated from the number of reserved resources and a number of resources used for retransmission with regard to traffic transmitted by the reserved resources.

In a communications system according to a twelfth other embodiment of this invention, the base station further includes means for obtaining information regarding communications quality, and the means for the reserving amplifies the relational value based on the information regarding communications quality, and allocates a resource of a time frame with the amplified relational value being small.

A base station according to a thirteenth other embodiment of this invention includes: means for obtaining a relational value related to a number of reserved resources on a time frame basis; and means for reserving a resource of a time frame with the relational value being small as a resource that can be used periodically.

In a base station according to a fourteenth other embodiment of this invention, the relational value includes the number of reserved resources.

In a base station according to a fifteenth other embodiment of this invention, the relational value includes a number of used resources that is calculated from the number of reserved resources and a number of temporarily-allocated resources.

In a base station according to a sixteenth other embodiment of this invention, in a case where a retransmission method for data is a synchronization system, a resource of a time frame with the number of used resources being small is allocated from among time frames which are to be used when the data is retransmitted.

In a base station according to a seventeenth other embodiment of this invention, the relational value includes a number of used resources that is calculated from the number of reserved resources and a number of resources used for retransmission with regard to traffic transmitted by the reserved resources.

A base station according to an eighteenth other embodiment of this invention further includes means for obtaining information regarding communications quality, in which the means for the receiving amplifies the relational value based on the information regarding communications quality, and allocates a resource of a time frame with the amplified relational value being small.

A program according to a nineteenth other embodiment of this invention causes a computer to function as: means for obtaining a relational value related to a number of reserved resources on a time frame basis; and means for reserving a resource of a time frame with the relational value being small as a resource that can be used periodically.

**Claims**

1.   A method of allocating resources in a communications system, comprising:

   obtaining (105) information regarding communications quality;
   reserving (102, 103; S101) resource blocks that can be used periodically; and
   allocating (104; S102) the reserved resource blocks to a terminal (200),
   wherein the reserving step (102, 103; S101) includes:

      obtaining (103) the number of reserved resource blocks on a time frame basis;
      calculating (S151) a selection index based on the number of reserved resource blocks and the number of reserved low-quality users for each frame as the information regarding communications quality; and
      performing (S152) the sorting in ascending order of the selection index,
      wherein the allocating step (140; S102) allocates the resource blocks in ascending order of the selection index of the time frame.

2.   Abase station (100), comprising:

   obtaining means (105) for obtaining information regarding communications quality;
   reserving means (102, 103; S101) for reserving resource blocks that can be used periodically; and
   allocating means (104; S102) for allocating the reserved resource blocks to a terminal (200),
   wherein the reserving means (102, 103; S101) includes:

      means (103) for obtaining the number of reserved resource blocks on a time frame basis;
      means (S151) for calculating a selection index based on the number of reserved resource blocks and the number of reserved low-quality users for each frame as the information regarding communications quality; and
      means (S152) for performing the sorting in ascending order of the selection index,
      wherein the allocating means (104; S102) allocates the resource blocks in ascending order of the selection index of the time frame.

3.   A communication system comprising a base station according to claim 2.

4.   A program, that causes a computer to function as:

   obtaining means (105) for obtaining information regarding communications quality;
   reserving means (102, 103; S101) for reserving resource blocks that can be used periodically; and
   allocating means (104; S102) for allocating the reserved resource blocks to a terminal (200),
   wherein the reserving means (102, 103; S101) includes:

      means (103) for obtaining the number of reserved resource blocks on a time frame basis;
      means (S151) for calculating a selection index based on the number of reserved resource blocks and the number of reserved low-quality users for each frame as the information regarding communications quality; and
      means (S152) for performing the sorting in ascending order of the selection index,
      wherein the allocating means (104; S102) allocates the resource blocks in ascending order of the selection index of the time frame.

**Patentansprüche**

1. Verfahren zum Zuweisen von Ressourcen in einem Kommunikationssystem, das aufweist:

   Beschaffen (105) von Informationen hinsichtlich der Kommunikationsqualität;
   Reservieren (102, 103; S101) von Ressourcenblöcken, die periodisch verwendet werden können; und
   Zuweisen (104; S102) der reservierten Ressourcenblöcke zu einem Endgerät (200),
   wobei der Reservierungsschritt (102, 103; S101) aufweist:

   Beschaffen (103) der Anzahl der reservierten Ressourcenblöcke auf einer Zeitrahmengrundlage;
   Berechnen (S151) eines Auswahlindex beruhend auf der Anzahl der reservierten Ressourcenblöcke und der Anzahl der reservierten Benutzer mit niedriger Qualität für jeden Rahmen als die Informationen hinsichtlich der Kommunikationsqualität; und
   Durchführen (S152) der Sortierung in aufsteigender Reihenfolge des Auswahlindex,
   wobei der Zuweisungsschritt (140; S102) die Ressourcenblöcke in aufsteigender Reihenfolge des Auswahlindex des Zeitrahmens zuweist.

2. Basisstation (100), die aufweist:

   ein Beschaffungsmittel (105) zum Beschaffen von Informationen hinsichtlich der Kommunikationsqualität;
   ein Reservierungsmittel (102, 103; S101) zum Reservieren von Ressourcenblöcken, die periodisch verwendet werden können; und
   ein Zuweisungsmittel (104; S102) zum Zuweisen der reservierten Ressourcenblöcke zu einem Endgerät (200),
   wobei das Reservierungsmittel (102, 103; S101) aufweist:

   ein Mittel (103) zum Beschaffen der Anzahl der reservierten Ressourcenblöcke auf einer Zeitrahmengrundlage;
   ein Mittel (S151) zum Berechnen eines Auswahlindex beruhend auf der Anzahl der reservierten Ressourcenblöcke und der Anzahl der reservierten Benutzer mit niedriger Qualität für jeden Rahmen als die Informationen hinsichtlich der Kommunikationsqualität; und
   ein Mittel (S152) zum Durchführen der Sortierung in aufsteigender Reihenfolge des Auswahlindex,
   wobei das Zuweisungsmittel (104; S102) die Ressourcenblöcke in aufsteigender Reihenfolge des Auswahlindex des Zeitrahmens zuweist.

3. Kommunikationssystem, das eine Basisstation nach Anspruch 2 aufweist.

4. Programm, das einen Computer veranlasst, zu funktionieren als:

   ein Beschaffungsmittel (105) zum Beschaffen von Informationen hinsichtlich der Kommunikationsqualität;
   ein Reservierungsmittel (102, 103; S101) zum Reservieren von Ressourcenblöcken, die periodisch verwendet werden können; und
   ein Zuweisungsmittel (104; S102) zum Zuweisen der reservierten Ressourcenblöcke zu einem Endgerät (200),
   wobei das Reservierungsmittel (102, 103; S101) aufweist:

   ein Mittel (103) zum Beschaffen der Anzahl der reservierten Ressourcenblöcke auf einer Zeitrahmengrundlage;
   ein Mittel (S151) zum Berechnen eines Auswahlindex beruhend auf der Anzahl der reservierten Ressourcenblöcke und der Anzahl der reservierten Benutzer mit niedriger Qualität für jeden Rahmen als die Informationen hinsichtlich der Kommunikationsqualität; und
   ein Mittel (S152) zum Durchführen der Sortierung in aufsteigender Reihenfolge des Auswahlindex,
   wobei das Zuweisungsmittel (104; S102) die Ressourcenblöcke in aufsteigender Reihenfolge des Auswahlindex des Zeitrahmens zuweist.

**Revendications**

1. Procédé d'attribution de ressources dans un système de communication, comprenant :

l'obtention (105) d'informations relatives à la qualité de communication ;
la réservation (102, 103 ; S101) de blocs de ressources pouvant être utilisés périodiquement; et
l'attribution (104 ; S102) des blocs de ressources réservés à un terminal (200),
où l'étape de réservation (102, 103 ; S101) comprend :

l'obtention (103) du nombre de blocs de ressources réservés sur la base d'une trame temporelle ;
le calcul (S151) d'un indice de sélection sur la base du nombre de blocs de ressources réservés et du nombre d'utilisateurs de faible qualité réservés pour chaque trame en tant qu'informations relatives à la qualité de communication ; et
l'exécution (S152) du tri dans l'ordre ascendant de l'indice de sélection,
où l'étape d'attribution (140 ; S102) attribue les blocs de ressources dans l'ordre ascendant de l'indice de sélection de la trame temporelle.

2. Station de base (100), comprenant :

un moyen d'acquisition (105) pour l'obtention d'informations relatives à la qualité de communication ;
un moyen de réservation (102, 103 ; S101) pour la réservation de blocs de ressources pouvant être utilisés périodiquement ; et
un moyen d'attribution (104 ; S102) pour l'attribution des blocs de ressources réservés à un terminal (200),
où le moyen de réservation (102, 103 ; S101) comprend :

un moyen (103) pour l'obtention du nombre de blocs de ressources réservés sur la base d'une trame temporelle ;
un moyen (S151) pour le calcul d'un indice de sélection sur la base du nombre de blocs de ressources réservés et du nombre d'utilisateurs de faible qualité réservés pour chaque trame en tant qu'informations relatives à la qualité de communication ; et
un moyen (S152) pour l'exécution du tri dans l'ordre ascendant de l'indice de sélection, où le moyen d'attribution (104 ; S102) attribué les blocs de ressources dans l'ordre ascendant de l'indice de sélection de la trame temporelle.

3. Système de communication comprenant une station de base selon la revendication 2.

4. Programme, entraînant le fonctionnement d'un ordinateur comme :

moyen d'acquisition (105) pour l'obtention d'informations relatives à la qualité de communication ;
moyen de réservation (102, 103 ; S 101) pour la réservation de blocs de ressources pouvant être utilisés périodiquement ; et
moyen d'attribution (104 ; S102) pour l'attribution des blocs de ressources réservés à un terminal (200),
où le moyen de réservation (102, 103 ; S101) comprend :

un moyen (103) pour l'obtention du nombre de blocs de ressources réservés sur la base d'une trame temporelle ;
un moyen (S151) pour le calcul d'un indice de sélection sur la base du nombre de blocs de ressources réservés et du nombre d'utilisateurs de faible qualité réservés pour chaque trame en tant qu'informations relatives à la qualité de communication ; et
un moyen (S152) pour l'exécution du tri dans l'ordre ascendant de l'indice de sélection, où le moyen d'attribution (104 ; S102) attribue les blocs de ressources dans l'ordre ascendant de l'indice de sélection de la trame temporelle.

FIG. 1

FIG. 2

```
                                               ┌──── S101
   ┌─────────────────────────────────────────────┐
   │   ┌─────────────────────────────┐            │
   │   │  CREATE INITIAL LIST        │~ S111      │
   │   │  BY FRAME NUMBERS           │            │
   │   └─────────────────────────────┘            │
   │                 │                            │
   │   ┌─────────────────────────────┐            │
   │   │  SORT LIST IN               │            │
   │   │  ASCENDING ORDER OF         │~ S112      │
   │   │  TRANSMISSION DELAY         │            │
   │   └─────────────────────────────┘            │
   │                 │                            │
   │   ┌─────────────────────────────┐            │
   │   │  SORT LIST IN ASCENDING     │            │
   │   │  ORDER OF NUMBER OF         │~ S113      │
   │   │  RESERVED RBs               │            │
   │   └─────────────────────────────┘            │
   └─────────────────────────────────────────────┘
```

FIG. 3

| RANKING | FRAME NUMBER | TRANS-MISSION DELAY | NUMBER OF RESERVED RBs |
|---------|--------------|---------------------|------------------------|
| 1 | 8 | 7 | 4 |
| 2 | 15 | 14 | 4 |
| 3 | 1 | 20 | 4 |
| 4 | 6 | 5 | 6 |
| 5 | 11 | 10 | 6 |
| 6 | 18 | 17 | 6 |

FIG. 4

FIG. 5

FIG. 6

FIG. 7

```
           ┌─────────────────────────┐
           │   CREATE INITIAL LIST    │──S111
           │   BY FRAME NUMBERS       │
           └─────────────────────────┘
                        │
           ┌─────────────────────────┐
           │      SORT LIST IN        │
           │ ASCENDING ORDER OF       │──S112
           │ TRANSMISSION DELAY       │
           └─────────────────────────┘
                        │
           ┌─────────────────────────┐
           │  SORT LIST IN ASCENDING  │
           │ ORDER OF AVERAGE NUMBER  │──S131
           │ OF USED RBs OF FIRST     │
           │ RETRANSMISSION FRAME     │
           └─────────────────────────┘
                        │
           ┌─────────────────────────┐
           │  SORT LIST IN ASCENDING  │
           │ ORDER OF AVERAGE NUMBER  │──S121
           │ OF USED RBs              │
           └─────────────────────────┘
```
──S101

## FIG. 8

| RANKING | FRAME NUMBER | TRANS-MISSION DELAY | NUMBER OF USED RBs OF FIRST RETRANS-MISSION | (FRAME NUMBER OF FIRST RETRANS-MISSION) | NUMBER OF USED RBs (INITIAL TRANS-MISSION) |
|---------|--------------|---------------------|----------------------------------------------|------------------------------------------|---------------------------------------------|
| 1 | 15 | 14 | 6 | (1) | 6 |
| 2 | 1 | 20 | 6 | (7) | 6 |
| 3 | 8 | 7 | 8 | (14) | 6 |
| 4 | 6 | 5 | 8 | (12) | 8 |
| 5 | 18 | 17 | 8 | (4) | 8 |
| 6 | 11 | 10 | 10 | (17) | 8 |

## FIG. 9

16

```
┌─────────────────────────────────────────────┐
│  ┌──────────────────────────┐                │ ⌐S101
│  │   CREATE INITIAL LIST     │ ～S111         │
│  │   BY FRAME NUMBERS        │               │
│  └──────────────────────────┘                │
│              ↓                                │
│  ┌──────────────────────────┐                │
│  │      SORT LIST IN         │ ～S112         │
│  │  ASCENDING ORDER OF       │               │
│  │  TRANSMISSION DELAY       │               │
│  └──────────────────────────┘                │
│              ↓                                │
│  ┌──────────────────────────┐                │
│  │  SORT LIST IN ASCENDING   │ ～S141         │
│  │  ORDER OF AVERAGE NUMBER  │               │
│  │  OF USED RBs OF TRAFFIC   │               │
│  │  INITIALLY TRANSMITTED    │               │
│  │      BY PERSISTENT        │               │
│  └──────────────────────────┘                │
└─────────────────────────────────────────────┘
              ↓
```

# FIG. 10

FIG. 11

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008515244 PCT
- WO 2007054874 A2
- US 2008175199 A1
- US 2008140842 A1

**Non-patent literature cited in the description**

- 3GPP E-UTRA and E-UTRAN Overall description. *3GPP TS 36.300 V8.4.0,* March 2008, 61